# EUROPÄISCHE PATENTSCHRIFT

(11) **EP 2 126 638 B1**
(45) Veröffentlichungstag und Bekanntmachung des Hinweises auf die Patenterteilung: **29.04.2015**
(21) Anmeldenummer: 08706789.8
(22) Anmeldetag: 17.01.2008
(51) Int. Cl.: G03H 1/20, G03H 1/26, B42D 25/328

(54) **VERFAHREN ZUM SCHREIBEN HOLOGRAPHISCHER PIXEL**
METHOD FOR WRITING HOLOGRAPHIC PIXELS
PROCÉDÉ D'ÉCRITURE DE PIXELS HOLOGRAPHIQUES

(30) Priorität: 17.01.2007 DE 102007003300
(43) Veröffentlichungstag der Anmeldung: 02.12.2009
(73) Patentinhaber: Bundesdruckerei GmbH, 10958 Berlin (DE)
(72) Erfinder: LEOPOLD, André, 10119 Berlin (DE); KUNATH, Christian, 12203 Berlin (DE); PAESCHKE, Manfred, 16348 Wandlitz OT Basdorf (DE)
(74) Vertreter: Jungblut, Bernhard Jakob
(86) Internationale Anmeldenummer: PCT/DE2008/000121
(87) Internationale Veröffentlichungsnummer: WO 2008/086795

(56) Entgegenhaltungen:
- EP-A- 1 739 507

## Beschreibung

### Gebiet der Erfindung.

Die Erfindung betrifft ein Verfahren zum Schreiben holographischer Pixel in einem Holographic Recordable Film, welcher eine photochemisch und/oder photophysikalisch durch Belichtung veränderbare Photokomponente enthält, wobei der Holographic Recordable Film über einem Reflexionsmaster positioniert wird, wobei ein Primärlichtstrahl auf den Holographic Recordable Film gelenkt wird, wobei der Primärlichtstrahl den Holographic Recordable Film durchdringt und an dem Reflexionsmaster zu einem Reflexionslichtstrahl reflektiert bzw. gebeugt wird, wobei der Primärlichtstrahl und der Reflexionslichtstrahl in dem Holographic Recordable Film innerhalb einer Interferenzzone interferieren und die Photokomponente in der Interferenzzone das holographische Pixel bildend verändern. Die Erfindung betrifft des weiteren ein Verfahren zur Herstellung eines Musters mit holographischen Pixeln unter Verwendung eines solchen Verfahrens, sowie ein Verfahren zur Herstellung eines Sicherheits- und/oder Wertdokumentes mit einem solchen Muster.

### Hintergrund der Erfindung und Stand der Technik.

Sicherheitselemente dienen dazu, ein Sicherheits- und/oder Wertdokument gegen Fälschung oder Kopieren zu sichern. In Sicherheitselementen könen auch individualisierende Angaben, beispielsweise Seriennummer, Ausweisnummer, biometrische Daten, Bilder (Passbilder), etc., enthalten sein. Diese können in Klarschrift bzw. Bildform oder optisch codiert bzw. maschinenlesbar vorgesehen sein.

Das grundsätzliche Vorgehen bei der Herstellung von Hologrammen, auch mit individualisierenden Angaben ist beilspielsweise in den Literaturstellen EP 0 896 260 A2 und EP 1 739 507 A1 beschrieben. Die Grundzüge werden folgend kurz erläutert. Zunächst wird ein Reflexionsmaster mit einem Masterhologramm hergestellt. Dann wird der Reflexionsmaster hinter einen Holographic Recordable Film positioniert, beispielsweise in flächigem Kontakt, ggf. getrennt durch eine Schutzfolie. Ein Primärlichtstrahl aus kohärentem Licht, beispielsweise aus einem Laser, wird auf die dem Reflexionsmaster abgewandte Seite des Holographic Recordable Films eingestrahlt, typischerweise mit definierter Wellenlänge und definiertem Inzidenzwinkel, nach Maßgabe des vom Reflexionsmaster zu rekonstruierenden holographischen Musters. Es durchdringt den Holographic Recordable Film und wird vom Reflexionsmaster gebeugt bzw. als Reflexionslichtstrahl reflektiert, wobei sich das Hologramm durch Interferenz zwischen Primärlichtstrahl und Reflexionslichtstrahl rekonstruiert und das Hologramm in dem Holographic Recordable Film abbildet und speichert durch photochemische oder photophysikalische Prozesse im Holographic Recordable Film. Dabei kann der Reflexionsmaster so ausgelegt sein, dass er für mehrere Wellenlängen empfindlich ist und diese entsprechend beugt.

Bei dem insofern bekannten Verfahren muss der Primärlichtstrahl einen minimalen Querschnitt bzw. Durchmesser aufweisen, welcher abhängig von dem Beugungswinkel am Reflexionsmaster sowie dem Abstand zwischen Reflexionsmaster und Holographic Recordable Film ist. Je größer der Abstand bei gegebenem Durchmesser des Primärlichtstrahles ist, um so kleiner ist die Interferenzzone im Holographic Recordable Film, da auf Grund der Winkelverhältnisse nur Teilquerschnitte des Primärlichtstrahles und des Reflexionslichtstrahles miteinander interferieren. Die nicht interferierenden Teilquerschnitte des Primärlichtstrahles und des Reflexionslichtstrahles verändern ebenfalls die Photokomponente des Holographic Recordable Films, und zwar in Nachbarbereichen neben der Interferenzzone, jedoch wird dabei keine holographische Struktur gespeichert. Solche Nachbarbereiche sind jedoch durch die (nicht holographische) Belichtung gar nicht oder vermindert empfindlich für eine holographische Belichtung, so dass die Dichte holographischer Pixel beschränkt ist und mit steigendem Abstand zwischen Reflexionsmaster und Holographic Recordable Film und damit auch notwendigerweise steigendem Durchmesser des Primärlichtstrahles (um überhaupt eine Interferenzzone zu bilden) sinkt.

Idealerweise wäre daher der Abstand zwischen Holographic Recordable Film und Reflexionsmaster null, da dann mit sehr kleinem Durchmesser des Primärlichtstrahles und folglich hoher Dichte der holographischen Pixel gearbeitet werden kann, was letztendlich zu einer hohen Auflösung und/oder hohen Informationsdichte des aus den holographischen Pixeln gebildeten holographischen Musters führt. Jedoch ist es in der Praxis meist erforderlich zwischen den Reflexionsmaster und dem Holographic Recordable Film eine Schutzfolie oder Schutzschicht anzuordnen, damit der Reflexionsmaster, welcher für eine Vielzahl von Holographic Recordable Filme verwendet wird, bei der wiederholten Benutzung nicht an seiner Oberfläche beschädigt bzw. abgenutzt wird, was in nachlassender Qualität des erzeugten holographischen Musters resultieren würde.

Technisches Problem der Erfindung.

Der Erfindung liegt daher das technische Problem zu Grunde, ein Verfahren zum Schreiben holographischer Pixel anzugeben, mit welchem trotz Beabstandung von Holographic Recordable Film und Reflexionsmaster ein Verhältnis des Querschnitts der Interferenzzone zum Querschnitt des Primärlichtstrahles erreicht wird, welches möglichst nahe bei 1 liegt. Des weiteren liegt der Erfindung das technische Problem zu Grunde, ein Verfahren zur Herstellung eines holographischen Musters anzugeben, dessen Dichte an holographischen Pixeln erhöht ist.

### Definitionen

Ein Sicherheitselement ist eine bauliche Einheit, die zumindest ein Sicherheitsmerkmal umfasst. Ein Sicherheitselement kann eine selbstständige bauliche Einheit sein, die mit einem Sicherheits- und/oder Wertdokument verbunden, beispielsweise verklebt werden kann, es kann sich aber auch um einen integralen Bestandteil eines Sicherheits- und/oder Wertdokumentes handeln. Ein Beispiel für erstes ist ein auf ein Sicherheits- und/oder Wertdokument aufklebbares Visum. Ein Beispiel für letzteres ist ein in einen Geldschein oder einen Ausweis integriertes, beispielsweise einlaminiertes Hologramm.

Ein Sicherheitsmerkmal ist eine Struktur, die nur mit (gegenüber einfachem Kopieren) erhöhtem Aufwand oder gar nicht unauthorisiert herstellbar bzw. reproduzierbar ist.

Als Sicherheits- und/oder Wertdokumente seien lediglich beispielhaft genannt: Personalausweise, Reisepässe, ID-Karten, Zugangskontrollausweise, Visa, Steuerzeichen, Tickets, Führerscheine, Kraftfahrzeugpapiere, Banknoten, Schecks, Postwertzeichen, Kreditkarten, beliebige Chipkarten und Haftetiketten (z.B. zur Produktsicherung). Solche Sicherheits- und/oder Wertdokumente weisen typischerweise ein Substrat, eine Druckschicht und optional eine transparente Deckschicht auf. Ein Substrat ist eine Trägerstruktur, auf welche die Druckschicht mit Informationen, Bildern, Mustern und dergleichen aufgebracht wird. Als Materialien für ein Substrat kommen alle fachüblichen Werkstoffe auf Papier- und/oder Kunststoffbasis in Frage.

Ein Muster besteht typischerweise aus einer Vielzahl nebeneinander angeordneter Pixel. Die Pixel eines Muster sind einander zugeordnet und in definierter Weise lateral zueinander angeordnet, typischerweise in zwei Raumdimensionen und ergeben in der Gesamtbetrachtung eine Darstellung, beispielsweise ein Bild, Symbol, Logo, Schriftzug (Buchstaben, Zahlen, alphanumerisch), oder Code (z.B. Barcode).

Ein Pixel bildet die Grundeinheit eines Musters aus einer Mehrzahl bzw. Vielzahl von Pixeln. Jedes Pixel kann dabei eine beliebige Farbe aufweisen. Verschiedene Pixel können gleiche oder verschiedene Farben aufweisen. Im letzteren Falle entsteht ein mehrfarbiges Muster, während in letzterem Fall ein monochromes Muster entsteht. Ein Pixel kann grundsätzlich jede beliebige Form aufweisen. Typischerweise ist ein Pixel in sich nahezu homogen. In Frage kommen insbesondere die Kreisform, elliptische Form, Qaudratform oder Rechteckform. Pixel eines Musters können unmittelbar aneinander anschließen oder einen Abstand zueinander aufweisen.

Ein holographisches Pixel ist ein Pixel, das durch Interferenz eines Primärlichtstrahles mit einem Reflexionslichtstrahl in einer Interferenzzone eines Holographic Recordable Films gebildet ist. Bereiche außerhalb einer Interferenzzone gehören nicht zu einem holographischen Pixel.

Ein Pixel kann in seiner Beugungseffizient und folglich der wahrgenommenen Intensität bzw. Helligkeit variieren. Unterschiedliche Beugungseffizienzen können durch unterschiedliche Dosisleistungen bzw. Energiedosen des Primärlichtstrahles erzeugt werden.

Ein Reflexionsmaster ist eine holographische Struktur, welche einfallendes Licht nach Maßgabe der Wellenlänge und/oder des Einfallwinkels gemäß der Bragg'schen Gesetze beugt bzw. reflektiert, nämlich mit Beugungswinkeln (Differenz der Raumwinkel vor und nach der Beugung) größer als 90°. Der Reflexionsgrad bei der Wellenlänge des Primärlichtstrahles liegt typischerweise über 50%.

Ein Transmissionhologramm ist eine holographische Struktur, welche einfallendes Licht nach Maßgabe der Wellenlänge und/oder des Einfallwinkels gemäß der Bragg'schen Gesetze beugt bzw. reflektiert, nämlich mit Beugungswinkeln (Differenz der Raumwinkel vor und nach der Beugung) kleiner als 90° (Vorwärtsbeugung). Die Beugungseffizienz bei der Wellenlänge des Primärlichtstrahles liegt typischerweise über 50%.

Eine Folie oder Schicht ist transparent, wenn der Transmissionsgrad bei der Wellenlänge des Primärlichtstrahles zumindest 10% beträgt.

Ein Primärlichtstrahl ist im Rahmen der Erfindung stets durch kohärentes Licht, beispielsweise aus einem Laser, mit einer vorgegebenen und einstellbaren bzw. wählbaren Wellenlänge gebildet. Die Wellenlänge kann im Sichtbaren, aber auch im IR oder UV liegen. Die Querschnittform eines Primärlichtstrahles kann grundsätzlich beliebig sein. Typischerweise handelt es sich um eine Kreisform, Quadratform oder Rechteckform. Der Begriff der Querschnittsfläche eines Primärlichtstrahles bezeichnet eine zur Strahlrichtung orthogonale Erstreckung des Primärlichtstrahles, wobei die Grenzen der Erstreckung durch Intensitäten definiert sind, welche kleiner als 1% der maximalen Intensität innerhalb der Querschnittsfläche sind. Als Primärlichtstrahl werden alle Teile des Strahlengangs von einer Lichtquelle bis zum Auftreffen auf den Reflexionsmaster bezeichnet.

Als Reflexionslichtstrahl sind alle Teile des Strahlengangs bezeichnet, welche nach dem Auftreffen des Primärlichtstrahles auf den Reflexionsmaster liegen.

Eine Interferenzzone ist ein Bereich, in welchem zwei verschiedene kohärente Lichtstrahlen, der Primärlichtstrahl und der Reflexionslichtstrahl, miteinander interferieren, wobei der Primärlichtstrahl und der Reflexionslichtstrahl aus einer einzigen Lichtquelle stammen, jedoch gegeneinander phasenverschoben sind.

Ein Spatial Light Modulator (SLM) erlaubt eine zweidimensional ortsaufgelöste Beleuchtung bzw. Bestrahlung eines meist flächigen Gegenstandes mit modulierter Intensität. Hierbei kann es sich beispielsweise um einem DMD (Digital Micromirror Device) Chip, LCD (Liquid Crystal Display) Transmissiondisplays, oder LCOS (Liquid Crystal on Silicon) Display handeln. Allen ist gemeinsam, dass eine Vielzahl von SLM-Pixeln gebildet ist, wobei jedes SLM-Pixel unabhängig von anderen SLM-Pixeln aktivierbar oder deaktivierbar ist (auch Zwischenstufen sind möglich), wodurch durch entsprechende Ansteuerung der SLM-Pixel sich Muster oder Bilder projizieren lassen. Durch die freie Ansteuerbarkeit können auch ohne Weiteres verschiedene Bilder oder Muster in zeitlicher Folge hintereinander generiert werden, beispielsweise in Form eines Passfotos.

Ein Code bzw. Muster ist individualisierend, wenn er einzigartig für eine Person oder einen Gegenstand oder eine Gruppe von Personen oder Gegenständen aus einer größeren Gesamtmenge an Personen oder Gegenständen ist. Ein für eine Gruppe von Personen innerhalb der Gesamtmenge der Einwohner eines Landes individualisierender Code ist beispielsweise die Stadt des Wohnortes. Ein für eine Person individualisierender Code ist beispielsweise die Nummer des Personalausweises oder das Passbild. Ein für eine Gruppe von Geldscheinen innerhalb der Gesamtmenge der Geldschiene individualisierender Code ist die Wertigkeit. Für einen Geldschein individualisierend ist die Seriennummer. Beispiele für nicht individualisierende Codes bzw. Muster sind Wappen, Siegel, Hoheitszeichen, etc.

Ein Holographic Recordable Film ist eine Schicht aus einem Material, welches photosensitiv ist, der Photokomponente, und in welcher sich Holographien durch irreversible, aber auch reversible photochemische und/oder photophysikalische Prozesse im Wege der Belichtung speichern lassen. Im Rahmen der Erfindung ist die eingesetzte Photokomponente irrelevant. Alle bekannten Materialien können eingesetzt werden, so dass auf die Fachliteratur des Durchschnittsfachmannes verwiesen werden kann. Lediglich beispielhaft seien die in der Holographie üblichen Photopolymere genannt.

Grundzüge der Erfindung und bevorzugte Ausführungsformen.

Zur Lösung des vorstehenden technischen Problems lehrt die Erfindung, dass zwischen dem Holographic Recordable Film und dem Reflexionsmaster ein Transmissionshologramm angeordnet wird, und dass das Transmissionshologramm den Primärlichtstrahl und/oder den Reflexionslichtstrahl mit der Maßgabe beugt, dass die Interferenzzone eine größere laterale Fläche, bezogen auf Richtungen orthogonal zur Flächennormalen des Holographic Recordable Films, aufweist als in Abwesenheit des Transmissionshologramms.

Die Erfindung nutzt die Tatsache, dass ein Transmissionshologramm einen einfallenden Lichtstrahl vorgegebener Wellenlänge nur dann beugt, wenn auch der Einfallswinkel des Lichtstrahles einem vorgegebenen Einfallswinkel entspricht, da ansonsten die Bragg schen Bedingungen nicht erfüllt sind. Fällt ein Lichtstrahl mit dem vorgegebenen Einfallswinkel ein, so wird er gebeugt. Fällt der Lichtstrahl unter einem anderen Einfallswinkel ein, so durchläuft er das Transmissionshologramm ohne Beugung. Im Rahmen der Erfindung wird nunmehr genutzt, dass beispielsweise entweder der Primärlichtstrahl oder der Reflexionslichtstrahl gleichsam einer Parallelverschiebung unterworfen werden, während der jeweils andere Lichtstrahl - wegen der durch Beugung am Reflexionsmaster unterschiedlichen Raumwinkel - ohne Beugung das Transmissionshologramm durchläuft. Dadurch können auf einfache Weise Strahlengänge konstruiert werden, durch welche die Überlappung und folglich Interferenz von Primärlichtstrahl und reflexionslichtstrahl in dem Holographic Recordable Film optimiert ist, i.e. die Interferenzzone ist maximal ausbildbar. Eine solche Konstruktion von Strahlengängen kann grundsätzlich für beliebige Abstände zwischen dem Reflektionsmaster und dem Holographic Recordable Film erfolgen. Im Ergebnis werden, bezogen auf einen vorgegebenen Querschnitt des Primärlichtstrahles, holographische Pixel mit maximaler lateraler Fläche erhalten. Die Konstruktion eines für einen gewählten Strahlengang benötigten Transmissionshologramms ist unschwer möglich und liegt im Können des Durchschnittsfachmannes, so dass dies hier nicht näher erläutert zu werden braucht.

Mit der Erfindung wird mehrerlei erreicht. Zum ersten kann der Querschnitt des Primärlichtstrahles gegenüber dem Stand der Technik beachtlich verkleinert werden, wodurch auch kleinere Pixel erzeugbar sind, und zwar ohne störende nicht-interferierende Belichtung von Nachbarbereichen. Dadurch kann auch eine höhere Auflösung erzielt werden. Zum zweiten wird durch die Vermeidung der nicht interferierenden Belichtung der Nachbarbereiche ermöglicht, auch unmittelbar anschließende holographische Pixel mit nahezu unverminderter Beugungseffizienz zu bilden. Hierdurch erhöhen sich Kontrast, Schärfe und Brillianz der erhaltenen Muster. Zum Dritten kann mit der höheren Auflösung eine höhere Informationsdichte auf einer vorgegebenen Fläche eingerichtet werden, beispielsweise im Falle von Mustern, die maschinenlesbare Codes bilden.

Im Rahmen der Erfindung sind die verschiedensten Ausführungsformen möglich.

Der Primärlichtstrahl kann beispielsweise eine Querschnittsfläche von 1 *µ*m² bis 10⁶ *µ*m², insbesondere von 10¹ *µ*m² bis 10⁵ *µ*m², aufweisen. Zur Erreichung sehr hoher Auflösungen liegt die Querschnittfläche typischerweise im Bereich von 1 *µ*m² bis 10⁴ *µ*m².

Die Interferenzzone kann eine laterale Fläche aufweisen, welche zumindest 10%, vorzugsweise zumindest 30%, höchstvorzugsweise zumindest 50%, der Querschnittsfläche des Primärlichtstrahles beträgt. Idealerweise liegt dieser Wert bei 80% und höher.

Der Abstand zwischen dem Reflexionsmaster und dem Holographic Recordable Film liegt typischerweise beispielsweise im Bereich von 20 *µ*m bis 200 *µ*m Die Dicke des Transmissionshologramms liegt beispielsweise im Bereich von 1 *µ*m bis 100 *µ*m.

Zwischen dem Reflexionsmaster und dem Transmissionshologramm und/oder zwischen dem Transmissionshologramm und dem Holographic Recordable Film kann eine für den Primärlichtstrahl und den Reflexionslichtstrahl transparente Abstands- oder Schutzschicht, beispielsweise eine Folie oder Beschichtung, wie eine UV-Lackschicht, welche eine Anti-Newton-Struktur bilden kann, angeordnet sein. Bei Anordnung zwischen dem Reflexionsmaster und dem Transmissionshologramm handelt es sich um eine Abstandsschicht. Bei Anordnung auf dem Transmissionshologramm, also zwischen diesem und dem Holographic Recordable Film, handelt es sich um eine Schutzschicht, die das Transmissionshologramm vor mechanischen Beschädigungen, wie Kratzer, und/oder Verschmutzungen schützt. Der Holographic Recordable Film kann seinerseits, ggf. zusätzlich zu der vorstehend genannten Schutzschicht eine eigene Schutzschicht oder Beschichtung auf der dem Transmissionshologramm zugewandten Seite aufweisen.

Es ist auch möglich, dass ein vorzugsweise eine bauliche Einheit bildender Verbund der Schichtfolge "Reflexionsmaster, Abstandsschicht, Transmissionshologramm, optional Schutzschicht" eingesetzt wird.

Grundsätzlich sind beliebige Strahlengänge von Primärlichtstrahl und Reflexionslichtstrahl zwischen dem Holographic Recordable Film und dem Reflexionsmaster konstruierbar. In einer Ausführungsform werden sowohl der Primärlichtstrahl als auch der Reflexionslichtstrahl von dem Transmissionshologramm gebeugt. Im einfachsten Fall kann dann der Primärlichtstrahl orthogonal auf den Holographic Recordable Film einstrahlen, wobei der Beugungswinkel des Primärlichtstrahles im Transmissionshologramm α - 90° beträgt, und wobei α der Winkel zwischen dem auf den Reflexionsmaster treffenden Primärlichtstrahl und dem vom Reflexionsmaster ausgehenden Reflexionslichtstrahl ist. Dann wird der von dem Reflexionsmaster ausgehende Reflexionslichtstrahl seinerseits orthogonal auf das Transmissionshologramm einfallen, so dass wiederum eine Beugung um α - 90° stattfindet. In alternativen Ausführungsformen kann entweder nur der Primärlichtstrahl oder nur der Reflexionslichtstrahl von dem Transmissionshologramm gebeugt werden.

Benachbarte holographische Pixel verschiedener Farben bzw. Schreibwellenlängen können beispielsweise dadurch gleichzeitig oder nacheinander erzeugt werden, dass mehrere Reflexionsmaster, welche bei verschiedenen Schreibwellenlängen beugen, übereinander gestapelt sind, wobei entweder die Wellenlänge des Primärlichtstrahles auf jeweils die verschiedenen Schreibwellenlängen eingestellt oder mehrere verschiedene Primärlichtstrahlen mit den jeweiligen verschiedenen Schreibwellenlängen eingesetzt werden. Jeder Reflexionsmaster beugt nur bei seiner Schreibwellenlänge und nicht bei den anderen Schreibwellenlängen. Dann kann mit einem einzigen Transmissionhologramm gearbeitet werden, wenn die Beugungsbedingungen so gewählt sind, dass dieses für die verschiedenen Schreibwellenlängen mit unterschiedlichen Winkeln beugt, nach Maßgabe des jeweiligen Abstandes des mit der jeweiligen Schreibwellenlänge beugenden Reflexionsmasters vom Holographic Recordable Film. Selbstverständlich ist es aber auch möglich, mit mehreren verschiedenen Transmissionshologrammen, welche übereinander gestapelt sind, zu arbeiten.

Die Erfindung lehrt auch ein Verfahren zur Herstellung eines Musters aus einer Mehrzahl von nebeneinander angeordneten holographischen Pixeln, wobei die Pixel mittels eines erfindungsgemäßen Verfahrens, wie ober erläutert, gleichzeltig oder sequentiell geschrieben werden. Hierzu wird beispielsweise ein SLM eingesetzt, mittels welchem das gewünschte Muster auf dem Holographic Recordable Film abgebildet wird.

Ein holographisches Muster, ist mit einem erfindungsgemäßen Verfahren erhältlich, wobei die holographischen Pixel mit einer Flächendichte von 10⁷ bis 10⁰ Pixel/mm², insbes. von 10⁵ bis 10² Pixel/mm² bzw. 10⁴ bis 10³ Pixel/mm² angeordnet sind.

Schließlich lehrt die Erfindung ein Verfahren zur Herstellung eines Sicherheits- und/oder Wertdokumentes, wobei ein holographischen Muster mit einem erfindungsgemäßen Verfahren hergestellt und als Sicherheitsmerkmal in des Sicherheits- und/oder Wertdokument eingebracht wird.

Im Folgenden wird die Erfindung anhand von lediglich Ausführungsformen darstellenden Figuren näher erläutert. Es zeigen:
- Figur 1:: eine Vorrichtung zur Herstellung eines Musters mit einem erfindungsgemäßen Verfahren
- Figur 2:: eine schematische Darstellung des Strahlengangs bei der Herstellung eines holographischen Pixels gemäß dem Stand der Technik (2a) und bei gleichen Beugungsbedingungen den Strahlengang gemäß der Erfindung (2b),
- Figur 3:: eine schematische Darstellung des Strahlengangs bei der Herstellung eines holographischen Pixels gemäß dem Stand der Technik mit anderem Strahlengang (3a) und bei gleichen Beugungsbedingungen den Strahlengang gemäß der Erfindung (3b), und
- Figur 4:: eine schematische Darstellung der erfindungsgemäßen Strahlengänge bei Einsatz mehrerer Reflexionsmaster für verschiedene Farben.

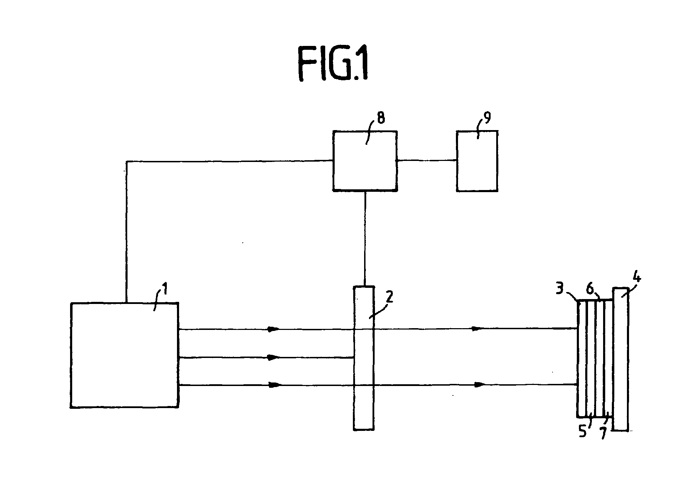

In der Figur 1 erkennt man eine Lichtquelle 1 für kohärentes Licht, einen Spatial Light Modulator 2, beispielsweise ein schwarz/weiss-LCD 2, einen Holographic Recordable Film 3 und einen Reflexionsmaster 4. Es ist eine Schichtfolge Reflexionsmaster 4, Abstandschicht 7, Transmissionshologramm 6, Schutzschicht 5 und Holographic Recordable Film 3 eingerichtet, wobei der Holographic Recordable Film 3 seinerseits eine nicht dargestellte Schutzfolie auf der dem Transmissionhologramm 6 zugewandten Seite tragen kann. Reflexionsmaster 4, Abstandsschicht 7, Transmissionshologramm 6 und Schutzschicht 5 sind als bauliche Einheit ausgebildet, i.e. die genannten Schichten sind unverschieblich miteinander verbunden.

Die Lichtquelle 1 ist dafür eingerichtet, zugleich oder nacheinander Punktstrahle oder Linienstrahle auf den Spatial Light Modulator 2 zu werfen, oder diesen vollflächig zu beleuchten. Hierbei wird jedes SLM-Pixel des Spatial Light Modulators 2 stets nur mit einer einzigen Farbe beleuchtet. Die Steuerung der Lichtquelle 1 in Hinblick auf Farbe, Form und Richtung bzw. Verlauf eines emittierten Lichtstrahles bzw. Strahlenbündels erfolgt mittels einer Steuerungseinheit 8. Dabei werden einzelne nicht dargestellte Laser nach Maßgabe der Steuerung ein- bzw. ausgeschaltet bzw. deren Strahl umgelenkt bzw. abgeschattet. Die Ausbildung und Anpassung des internen Aufbaus der Lichtquelle 1 an das konkrete gewünschte Herstellungsverfahren im Einzelnen ist für den Fachmann einfach und bedarf nicht der näheren Erläuterung.

Der Spatial Light Modulator 2 ist ebenfalls an die Steuerungseinheit 8 angeschlossen. Schließlich weist die Steuerungseinheit 8 ein Interface 9 auf, über welches ein in ein Hologramm unzuwandelndes Muster oder Bild, beispielsweise ein Passbild, eingespeist werden kann.

In der Steuerungseinheit 8 erfolgt eine Prozessierung eines eingegebenen Bildes und eine synchrone Steuerung der Lichtquelle 1 und des Spatial Light Modulators 2 in fachüblicher Weise.

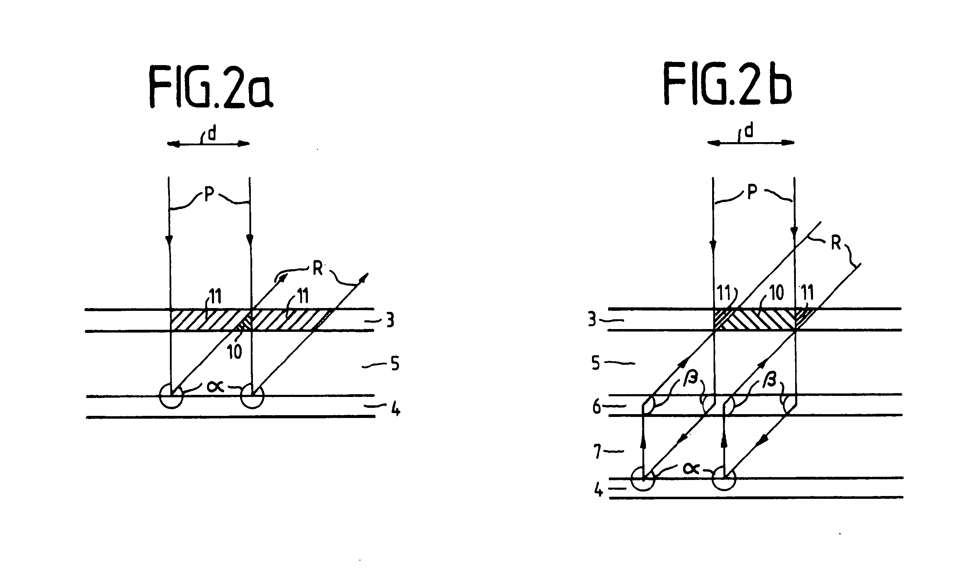

Die Figur 2a zeigt eine schematische Detaildarstellung des Strahlenganges bei einem Verfahren des Standes der Technik. Zunächst ist anzumerken, dass in dieser Figur sowie den folgenden Figuren Brechungswinkel an Phasengrenzflächen, sofern zu erwarten, der Übersichtlichkeit halber nicht dargestellt sind, da Brechungseffekte für das Verständnis der Erfindung irrelevant sind.

In der Fig. 2a erkennt man zunächst den Holographic Recordable Film 3, welcher eine photochemisch und/oder photophysikalisch durch Belichtung veränderbare Photokomponente enthält. Der Holographic Recordable Film 3 ist über dem Reflexionsmaster 4 positioniert. Zwischen dem Holographic Recordable Film 3 und dem Reflexionsmaster 4 ist eine transparente Schutzschicht 5 eingerichtet. Ein Primärlichtstrahl P mit dem Durchmesser d ist auf den Holographic Recordable Film 3 gelenkt, und zwar orthogonal zu Holographic Recordable Film 3. Der Primärlichtstrahl P durchdringt den Holographic Recordable Film 3 und wird an dem Reflexionsmaster 4 zu einem Reflexionslichtstrahl R mit dem Beugungswinkel α reflektiert. Der Primärlichtstrahl P und der Reflexionslichtstrahl R interferieren in dem Holographic Recordable Film 4 innerhalb einer Interferenzzone 10 und verändern die Photokomponente in der Interferenzzone 10 das holographische Pixel 10 bildend. Man erkennt, dass auf Grund der Dicke der Schutzschicht 5 die Interferenzzone 10 eine nur geringe laterale Ausdehnung aufweist. Dagegen sind Nachbarbereiche 11 ersichtlich, in welchen keine Interferenz stattfindet, und welche für die Bildung eines benachbarten holographischen Pixels nicht zur Verfügung stehen, oder in welchen holographische Pixel mit nur verringerter Beugungseffizienz bildbar sind. Der Grund liegt in der (nicht interferierenden) "Vorbelichtung" durch Bildung des Pixels 10 in der Darstellung der Figur 2a.

In der Figur 2b erkennt man, dass ein Transmissionshologram 6 an jener Stelle positioniert ist, wo in der Figur 2a der Reflexionsmaster 4 ist (die Dicke der Schutzschicht 5 und der Durchmesser d des Primärlichtstrahles P sind in beiden Teilfiguren gleich). Zwischen dem Transmissionshologramm 6 und dem Reflexionsmaster 4 ist zudem die Abstandsschicht 7 eingerichtet. Das Transmissionshologramm 6 beugt Licht der Wellenlänge des Primärlichtstrahles P, das orthogonal einfällt, stets mit dem Winkel β, wobei β = α - 90° ist. Eine Betrachtung der Strahlenganggeometrie sowie ein Vergleich mit der Figur 2a zeigt, dass die Interferenzzone 10 erheblich größer ist und praktisch dem Durchmesser d des Primärlichtstrahles P entspricht. Benachbarte Bereiche 11 sind demgegenüber vernachlässigbar klein.

Das Transmissionshologramm 6 beugt also den Primärlichtstrahl P und den Reflexionslichtstrahl R so, dass gemäß der Figur 2b die Interferenzzone 10 eine größere laterale Fläche, bezogen auf Richtungen orthogonal zur Flächennormalen des Holographic Recordable Films 3, aufweist als in Abwesenheit des Transmissionshologramms gemäß Figur 2a. Dadurch kann der Durchmesser d des Primärlichtstrahles P noch erheblich kleiner als in der Darstellung gewählt werden, was kleinere Verhältnisse von d zur Größe eines Pixels 10 ermöglicht (idealerweise im Bereich 10 bis 1, vorzugsweise 5 bis 1, weiterhin vorzugsweise 2 bis 1, und höchstvorzugsweise 1,2 zu 1). Zudem können benachbarte Pixel 10 mit erhöhter Beugungseffizienz ausgestattet werden, wodurch Auflösung, Kontrast und Brillianz verbessert werden. Demgegenüber würde eine Verkleinerung des Durchmessers d des Primärlichtstrahles P in der Darstellung der Figur 2a dazu führen, dass überhaupt keine Interferenzzone 10 und somit kein holographisches Pixel 10 gebildet wird.

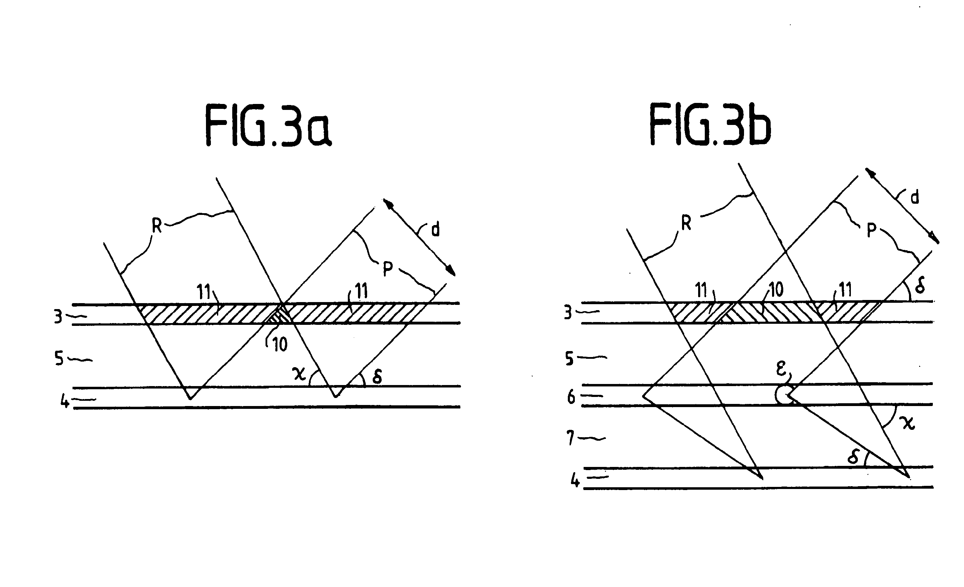

In den Figuren 3a und 3b sind Darstellungen ersichtlich, welche mit den vorstehend beschriebenen Figuren 2a und 2b korrespondieren, wobei jedoch die Beugungsbedingungen des Transmissionshologramms 6 anders gestaltet sind. Der Primärlichtstrahl P wird bei seiner Wellenlänge und bei Einfall mit der Figur 3b dargestellten Einfallswinkel δ auf das Transmissionshologramm mit einem Winkel ε gebeugt, wobei ε = 360° - 2δ ist. Dadurch fällt der Primärlichtstrahl wieder unter dem Winkel 8 auf den Reflexionsmaster 4. Dort wird er wiederum gebeugt, so dass der Reflexionslichtstrahl R mit dem Winkel χ auf das Transmissionshologramm 6 fällt. Da χ und δ verschieden sind und für einen Einfallswinkel χ bei der betreffenden Wellenlänge keine Bragg'schen Bedingungen erfüllt sind, durchläuft der Reflexionslichtstrahl R das Transmissionshologramm 6 ohne Beugung. Durch vergleichende Betrachtung der Figuren 3a und 3b erkennt man, dass das Transmissionshologramm 6 den Primärlichtstrahl P aber nicht den Reflexionslichtstrahl R so beugt, dass gemäß der Figur 3b die Interferenzzone 10 eine größere laterale Fläche, bezogen auf Richtungen orthogonal zur Flächennormalen des Holographic Recordable Films 3, aufweist als in Abwesenheit des Transmissionshologramms gemäß Figur 3a. Demgegenüber sind die Nachbarbereiche 11 in der Figur 3b kleiner als in der Figur 3a. Hierbei kann natürlich noch eine gegenüber der Darstellung der Figur 3b weiter verbesserte Strahlenführung erreicht werden, so dass auch hierbei maximale Größe eines Pixels 10, bezogen auf den Durchmesser d des Primärlichtstrahles P erreicht werden kann, bzw. minimaler Durchmesser d des Primärlichtstrahles P.

Eine den Figuren 3a und 3b analoge Darstellung erhielte man, wenn das Transmissionhologramm 6 beim Einfallswinkel χ beugen würde, nicht jedoch beim Einfallswinkel δ. Dann würde das Transmissionshologramm 6 umgekehrt den Reflexionslichtstrahl R aber nicht den Primärlichtstrahl P so beugen, dass die Interferenzzone 10 eine größere laterale Fläche, bezogen auf Richtungen orthogonal zur Flächennormalen des Holographic Recordable Films 3, aufweist als in Abwesenheit des Transmissionshologramms 4. Das Ergebnis wäre jedoch das gleiche.

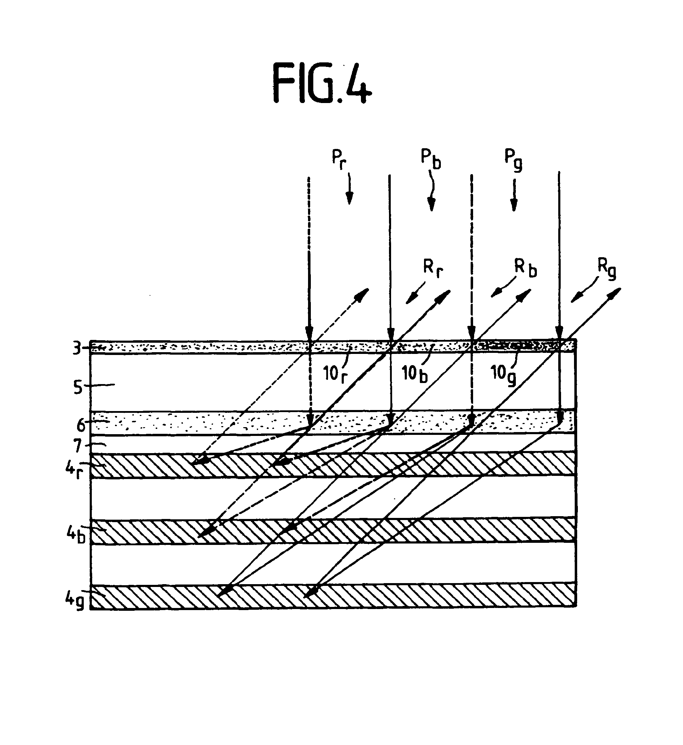

In der Figur 4 ist eine Variante dargestellt, in welcher drei verschiedene Reflexionsmaster 4ᵣ, 4_{b} und 4_{g} eingerichtet sind, wobei die Indizes für verschiedene Wellenlängen, beispielsweise die Farben rot, blau und grün stehen. Unterschiedliche Wellenlängen werden vom Transmissionshologramm 6 unter unterschiedlichen Winkeln gebeugt, und zwar so, dass die Primärlichtstrahlen Pᵣ, P_{b} und Pg unter Beugungsbedingungen auf ihre jeweils wellenlängenmäßig zugeordneten Reflexionsmaster 4ᵣ, 4_{b} und 4g treffen und dass die Reflexionslichtstrahlen Rᵣ, R_{b} und R_{g} so gebeugt werden, dass die jeweiligen Interferenzzonen 10ᵣ, 10_{b} und 10_{g} jeweils eine größere laterale Fläche, bezogen auf Richtungen orthogonal zur Flächennormalen des Holographic Recordable Films 3, aufweisen als in Abwesenheit des Transmissionshologramms 6.

## Patentansprüche

1. Verfahren zum Schreiben holographischer Pixel (10) in einem Holographic Recordable Film (3), welcher eine photochemisch und/oder photophysikalisch durch Belichtung veränderbare Photokomponente enthält,
wobei der Holographic Recordable Film (3) über einem Reflexionsmaster (4) positioniert wird,
wobei ein Primärlichtstrahl (P) auf den Holographic Recordable Film (3) gelenkt wird,
wobei der Primärlichtstrahl (P) den Holographic Recordable Film (3) durchdringt und an dem Reflexionsmaster (4) zu einem Reflexionslichtstrahl (R) reflektiert wird,
wobei der Primärlichtstrahl (P) und der Reflexionslichtstrahl (R) in dem Holographic Recordable Film (3) innerhalb einer Interferenzzone (10) interferieren und die Photokomponente in der Interferenzzone (10) das holographische Pixel (10) bildend verändern,
**dadurch gekennzeichnet,**
**dass** zwischen dem Holographic Recordable Film (3) und dem Reflexionsmaster (4) ein Transmissionshologramm (6) angeordnet wird, und
**dass** das Transmissionshologramm (6) den Primärlichtstrahl (P) und/oder den Reflexionslichtstrahl (R) mit der Maßgabe beugt, dass die Interferenzzone (10) eine größere laterale Fläche, bezogen auf Richtungen orthogonal zur Flächennormalen des Holographic Recordable Films (3), aufweist als in Abwesenheit des Transmissionshologramms (6).

2. Verfahren nach Anspruch 1, **dadurch gekennzeichnet, dass** der Primärlichtstrahl (P) eine Querschnittsfläche von 1 *µ*m² bis 10⁶ *µ*m², insbesondere von 10² *µ*m² bis 10⁵ *µ*m², aufweist.

3. Verfahren nach Anspruch 1 oder 2, **dadurch gekennzeichnet**, das die Interferenzzone (10) eine laterale Fläche aufweist, welche zumindest 10%, vorzugsweise zumindest 30%, höchstvorzugsweise zumindest 50%, der Querschnittsfläche des Primärlichtstrahles (P) beträgt.

4. Verfahren nach einem der Ansprüche 1 bis 3, **dadurch gekennzeichnet, dass** der Abstand zwischen dem Reflexionsmaster (4) und dem Holographic Recordable Film (3) im Bereich von 20 *µ*m bis 200 *µ*m liegt.

5. Verfahren nach einem der Ansprüche 1 bis 4, **dadurch gekennzeichnet, dass** die Dicke des Transmissionshologramms (6) im Bereich von 1 *µ*m und 100 *µ*m liegt.

6. Verfahren nach einem der Ansprüche 1 bis 5, **dadurch gekennzeichnet, dass** zwischen dem Reflexionsmaster (4) und dem Transmissionshologramm (6) und/oder zwischen dem Transmissionshologramm (6) und dem Holographic Recordable Film (3) eine für den Primärlichtstrahl und den Reflexionslichtstrahl transparente Schutzschicht (5) oder Abstandschicht (7) angeordnet ist.

7. Verfahren nach einem der Ansprüche 1 bis 6, **dadurch gekennzeichnet, dass** sowohl der Primärlichtstrahl (P) als auch der Reflexionslichtstrahl (R) von dem Transmissionshologramm (6) gebeugt werden.

8. Verfahren nach Anspruch 7, dadurch gekennzeichent, dass der Primärlichtstrahl (P) orthogonal auf den Holographic Recordable Film (3) einstrahlt, dass der Beugungswinkel des Primärlichtstrahles (P) im Transmissionshologramm (6) α + 90° beträgt, wobei α der Winkel zwischen dem auf den Reflexionsmaster (4) treffenden Primärlichtstrahl (P) und dem vom Reflexionsmaster (4) ausgehenden Reflektionslichstrahl (R) ist.

9. Verfahren nach einem der Ansprüche 1 bis 6, **dadurch gekennzeichnet, dass** entweder nur der Primärlichtstrahl (P) oder nur der Reflexionslichtstrahl (R) von dem Transmissionshologramm (6) gebeugt werden.

10. Verfahren nach einem der Ansprüche 1 bis 9, **dadurch gekennzeichnet, dass** mehrere Reflexionsmaster (4ᵣ, 4_{b}, 4_{g}), welche bei verschiedenen Schreibwellenlängen (r, b, g) beugen, übereinander gestapelt sind, wobei entweder die Wellenlänge des Primärlichtstrahles (P) auf jeweils die verschiedenen Schreibwellenlängen (r, b, g) eingestellt oder mehrere verschiedene Primärlichtstrahlen (P) mit dem jeweiligen verschiedenen Schreibwellenlängen (r, b, g) eingesetzt werden.

11. Verfahren zur Herstellung eines Musters aus einer Mehrzahl von nebeneinander angeordneten holographischen Pixeln (10), wobei die Pixel (10) mittels eines Verfahrens nach einem der Ansprüche 1 bis 10 gleichzeitig oder sequentiell geschrieben werden.

12. Verfahren zur Herstellung eines Sicherheits- und/oder Wertdokumentes,
wobei ein holographisches Muster mit dem Verfahren nach Anspruch 11 hergestellt wird, so dass die holographischen Pixel (10) mit einer Flächendichte von 10° Pixel/ mm² bis 10⁷ Pixel/mm² angeordnet sind, und
das Sicherheits- und/oder Wertdokument mit dem holographischen Muster als Sicherheitsmerkmal versehen wird.

## Claims

1. A method for writing holographic pixels (10) in a holographic recordable film (3), which contains a photo component that can be modified photochemically and/or photophysically by exposure, the holographic recordable film (3) being positioned over a reflection master (4), a primary light beam (P) being guided onto the holographic recordable film (3), the primary light beam (P) passing through the holographic recordable film (3) and being reflected at the reflection master (4) so to form a reflection light beam (R), the primary light beam (P) and the reflection light beam (R) interfering in the holographic recordable film (3) in an interference zone (10), and changing the photo component in the interference zone (10) so to form the holographic pixel (10),
**characterized in**
**that** between the holographic recordable film (3) and the reflection master (4) a transmission hologram (6) is disposed, and that the transmission hologram (6) diffracts the primary light beam (P) and/or the reflection light beam (R) with the proviso that that the interference zone (10) has a larger lateral surface, relative to directions orthogonal to the surface normal of the holographic recordable film (3), than in the absence of the transmission hologram (6).

2. The method according to claim 1, **characterized in that** the primary light beam (P) has a cross-sectional area from 1 µm² to 10⁶ µm², in particular from 10² µm² to 10⁵ µm².

3. The method according to claim 1 or 2, **characterized in that** the interference zone (10) has a lateral surface, which is at least 10 %, preferably at least 30 %, most preferably at least 50 %, of the cross-sectional area of the primary light beam (P).

4. The method according to one of claims 1 to 3, **characterized in that** the distance between the reflection master (4) and the recordable holographic film (3) is in the range from 20 µm to 200 µm.

5. The method according to one of claims 1 to 4, **characterized in that** the thickness of the transmission hologram (6) is in the range from 1 µm to 100 µm.

6. The method according to one of claims 1 to 5, **characterized in that** between the reflection master (4) and the transmission hologram (6) and/or between the transmission hologram (6) and the holographic recordable film (3), a protective layer (5) being transparent for the primary light beam and the reflection light beam, or a spacer layer (7) is disposed.

7. The method according to one of claims 1 to 6, **characterized in that** both the primary light beam (P) and the reflection light beam (R) are diffracted by the transmission hologram (6).

8. The method according to claim 7, **characterized in that** the primary light beam (P) is irradiated orthogonally onto the holographic recordable film (3), that the diffraction angle of the primary light beam (P) in the transmission hologram (6) is α + 90°, wherein α is the angle between the primary light beam (P) incident on the reflection master (4) and the reflection light beam (R) going out from the reflection master (4).

9. The method according to one of claims 1 to 6, **characterized in that** either only the primary light beam (P) or only the reflection light beam (R) is diffracted by the transmission hologram (6).

10. The method according to one of claims 1 to 9, **characterized in that** a plurality of reflection masters (4ᵣ, 4_{b}, 4g), which diffract at different writing wavelengths (r, b, g), are stacked on each other, wherein either the wavelength of the primary light beam (P) is adjusted to each of the different writing wavelengths (r, b, g), or a plurality of different primary light beams (P) with the respective different writing wavelengths (r, b, g) are used.

11. A method for producing a pattern of a plurality of adjacent holographic pixels (10), wherein the pixels (10) are written simultaneously or sequentially by means of a method according to one of claims 1 to 10.

12. A method for producing a security and/or value document, wherein a holographic pattern is produced by means of the method according to claim 11, so that the holographic pixels (10) are arranged at a surface density from 10⁰ pixels/mm² to 10⁷ pixels/mm², and that the security and/or value document is provided with the holographic pattern as a safety feature.

## Revendications

1. Procédé d'écriture des pixels holographiques (10) dans un film enregistrable holographique (3), qui contient un photocomposant pouvant être modifié de manière photochimique et/ou photophysique par éclairage, le film enregistrable holographique (3) étant positionné au-dessus d'un master de réflexion (4), un rayon de lumière primaire (P) étant guidé sur le film enregistrable holographique (3), le rayon de lumière primaire (P) traversant le film enregistrable holographique (3) et étant réfléchi au master de réflexion (4) pour former un rayon de lumière réfléchie (R), le rayon de lumière primaire (P) et le rayon de lumière réfléchie (R) interférant dans le film enregistrable holographique (3) à l'intérieur d'une zone d'interférence (10), et modifiant le photocomposant dans la zone d'interférence (10), formant ainsi le pixel holographique (10),
**caractérisé en ce**
**qu'**entre le film enregistrable holographique (3) et le master de réflexion (4), un hologramme de transmission (6) est disposé, et que l'hologramme de transmission (6) diffracte le rayon de lumière primaire (P) et/ou le rayon de lumière réfléchie (R) de façon que la zone d'interférence (10) présente une plus grande surface latérale, relativement à des directions orthogonales à la normale à la surface du film enregistrable holographique (3), qu'en absence de l'hologramme de transmission (6).

2. Procédé selon la revendication 1, **caractérisé en ce que** le rayon de lumière primaire (P) présente une section transversale dont la surface est comprise dans la gamme de 1 µm² à 10⁶ µm², en particulier de 10² µm² à 10⁵ µm².

3. Procédé selon la revendication 1 ou 2, **caractérisé en ce que** la zone d'interférence (10) présente une surface latérale, qui est au moins de 10 %, de préférence au moins de 30 %, de préférence la plus haute au moins de 50 %, de la surface de la section transversale du rayon de lumière primaire (P).

4. Procédé selon une des revendications 1 à 3, **caractérisé en ce que** la distance entre le master de réflexion (4) et le film enregistrable holographique (3) est comprise dans la gamme de 20 µm à 200 µm.

5. Procédé selon une des revendications 1 à 4, **caractérisé en ce que** l'épaisseur de l'hologramme de transmission (6) est comprise dans la gamme de 1 µm à 100 µm.

6. Procédé selon une des revendications 1 à 5, **caractérisé en ce qu'**entre le master de réflexion (4) et l'hologramme de transmission (6) et/ou entre l'hologramme de transmission (6) et le film enregistrable holographique (3), une couche protectrice (5) étant transparente pour le rayon de lumière primaire et le rayon de lumière réfléchie, ou une couche d'écartement (7) est disposée.

7. Procédé selon une des revendications 1 à 6, **caractérisé en ce que** le rayon de lumière primaire (P) aussi bien que le rayon de lumière réfléchie (R) sont diffractés par l'hologramme de transmission (6).

8. Procédé selon la revendication 7, **caractérisé en ce que** le rayon de lumière primaire (P) est irradié orthogonalement sur le film enregistrable holographique (3), que l'angle de diffraction du rayon de lumière primaire (P) dans l'hologramme de transmission (6) est α + 90°, où α est l'angle entre le rayon de lumière primaire (P) incident sur le master de réflexion (4) et le rayon de lumière réfléchie (R) émis par le master de réflexion (4).

9. Procédé selon une des revendications 1 à 6, **caractérisé en ce que** seulement le rayon de lumière primaire (P) ou bien seulement le rayon de lumière réfléchie (R) est diffracté par l'hologramme de transmission (6).

10. Procédé selon une des revendications 1 à 9, **caractérisé en ce qu'**une pluralité de masters de réflexion (4ᵣ, 4_{b}, 4_{g}), qui diffractent à des longueurs d'ondes d'écriture différentes (r, b, g), sont empilés l'un sur l'autre, dans lequel la longueur d'onde du rayon de lumière primaire (P) est ajustée à chacune des longueurs d'ondes d'écriture différentes (r, b, g) ou bien une pluralité de rayons de lumière primaire (P) différents avec les longueurs d'ondes d'écriture différentes (r, b, g) respectifs sont utilisés.

11. Procédé de fabrication d'un motif à partir d'une pluralité de pixels holographiques (10) voisins, dans lequel les pixels (10) sont écrits simultanément ou séquentiellement au moyen d'un procédé selon une des revendications 1 à 10.

12. Procédé de fabrication d'un document de sécurité et/ou de valeur, dans lequel un motif holographique est généré au moyen du procédé selon la revendication 11, de façon que les pixels holographiques (10) soient arrangés à une densité de surface comprise dans la gamme de 10⁰ pixels/mm² à 10⁷ pixels/mm², et que le document de sécurité et/ou de valeur est pourvu du motif holographique comme caractéristique de sécurité.
